# EUROPÄISCHE PATENTANMELDUNG

(11) **EP 1 688 031 A1**
(43) Veröffentlichungstag der Anmeldung: **09.08.2006**
(21) Anmeldenummer: 05026583.4
(22) Anmeldetag: 06.12.2005
(51) Int. Cl.: A01D 75/18, A01F 29/16, G01V 3/10

(54) **Metalldetektionseinrichtung**

(30) Priorität: 07.02.2005 DE 102005005736
(71) Anmelder: CLAAS Selbstfahrende Erntemaschinen GmbH, 33428 Harsewinkel (DE)
(72) Erfinder: Behnke, Willi, 33803 Steinhagen (DE); Brune, Markus, 33428 Marienfeld (DE)

(57) **Zusammenfassung**

Die Erfindung betrifft eine Metalldetektionseinrichtung (17) für ein wenigstens ein angetriebenes Arbeitsorgan (6, 7) aufweisendes Arbeitsaggregat (6, 7) zum Fördern von Emtegut, bestehend aus Spulen (38.1 -38.8) zur Erzeugung von elektrischen Detektionssignalen (S) bei Anwesenheit von Metallteilen (18) im Bereich des Arbeitsaggregates (6; 7), wobei die von den Spulen (38.1 -38.8) erzeugten Detektionssignale (S) in einem Zeitfenster (Z) erfasst werden, wodurch eine genauere Identifikation des Metallteils (18) ermöglicht wird.

## Beschreibung

Die Erfindungen betrifft eine Metalldetektionseinrichtung gemäß dem Oberbegriff des Anspruchs 1.

In der EP 0 702 248 ist ein Metalldetektor an einem Feldhäcksler zum Erkennen metallischer Fremdstoffe im Erntegut offenbart. Der Metalldetektor ist in einer unteren Zuführtrommel angeordnet und besteht aus drei über die Breite der Zuführtrommel angeordneten Magnetspulen. Um die Lage des Metallstücks näher bestimmen zu können, erzeugt eine Signalverarbeitungseinheit Differenzspannungen, die den Differenzen zwischen jeweils zwei der drei einzelnen von den Spulen erzeugten Spannungen entsprechen und vergleicht die Differenzspannungen miteinander bzw. mit einem Schwellwert. Sie berechnet weiterhin die Summe der Spulenspannungen und erzeugt ein Betätigungs- bzw. Auslösesignal, wenn die Summe der Spannungen größer als ein vorgegebener Schwellwert ist, wodurch die Abschalteinrichtung für die Einzugstrommeln betätigt sowie eine Alarm- und /oder Anzeigeeinheit eingeschaltet wird.

Nachteilig bei dieser bekannten Erntemaschine ist, dass mit dem Metalldetektor lediglich die Lage des Metallteils über die Breite des Metalldetektors im Moment der Schwellwertüberschreitung ermittelbar ist. Die weitere Bewegung des Metallteils bis zum Stillstand der Einzugsorgane bleibt bei derartig ausgeführten Metalldetektionseinrichtungen unberücksichtigt.

Der Erfindung liegt daher die Aufgabe zugrunde, eine Vorrichtung zu schaffen, die eine genauere Identifikation des Fremdkörpers ermöglicht.

Diese Aufgabe wird erfindungsgemäß durch die kennzeichnenden Merkmale des Anspruchs 1 gelöst. Weitere vorteilhafte Wirkungen des Erfindungsgegenstandes ergeben sich aus den Unteransprüchen.

Vorteilhafterweise werden die von den Spulen erzeugten Detektionssignale in einem Zeitfenster erfasst, so dass die Erstreckung des Metallteiles sowohl über die Arbeitsbreite der Vorpresswalze als auch in Förderrichtung der Vorpresswalze ermittelt werden kann. Auf diese Weise wird sichergestellt, dass ein durch den Nachlauf der Förderorgane bewirkter Weitertransport des metallischen Gegenstands erfasst und seine genaue Lage im Moment des Stillstands der Arbeitsorgane bekannt wird.

Dadurch, dass das Zeitfenster startet, wenn das Detekfionssignal wenigstens einer Spule einen Schwellwert überschreitet, beginnt das Zeitfenster unmittelbar nach der Detektion eines Metallteils.

Vorteilhafterweise endet das Zeitfenster, sobald die Arbeitsorgane den Stillstand erreicht haben, da zu diesem Zeitpunkt die Förderung des Emteguts gestoppt wird.

Eine kostengünstige Ausgestaltung der Erfindung ergibt sich, wenn der Stillstand der Arbeitsorgane mittels Drehzahlsensoren überwacht wird, da diese ohnehin zur Drehzahlüberwachung am Feldhäcksler vorgesehen sind.

In einer vorteilhaften Ausgestaltung der Erfindung ist jede Spule von einem Dauermagneten durchsetzt und bildet jeweils einen Detektionsbereich und die Detektionssignale sind Induktionsspannungen, die durch die Anwesenheit des Metallteils in dem von der zugehörigen Spule erzeugten Detektionsbereich von der zugehörigen Spule generiert werden, so dass das Metallteil an unterschiedlichen Stellen erkennbar ist.

Indem sich die benachbarten Detektionsbereiche überlappen und zusammen eine Arbeitsbreite der Metalldetektionseinrichtung begrenzen, kann ein Metallteil über die gesamte Breite des Arbeitsorgans ermittelt werden. Zudem werden Sensorungenauigkeiten in den Randzonen der Detektierbereiche durch die Überlappung abgeschwächt oder kompensiert.

Um die Detektionssignale direkt zu verarbeiten werden sie vorteilhafterweise an eine Signalverarbeitungseinheit übermittelt.

Dadurch, dass die Signalauswerteeinrichtung die Detektionssignale mit einem Schwellwert vergleicht und bei Überschreiten des Schwellwertes den Schnellstop wenigstens eines Arbeitsaggregates auslöst, können Beschädigungen am Feldhäcksler vermieden werden. Zudem wird sichergestellt, dass die Häufigkeit von Fehlauslösungen der sogenannten Schnellstoppvorrichtung durch die Definition eines Schwellwertes reduziert oder ganz vermieden wird.

Um die Lage und Breite des Metallteils bezogen auf die Arbeitsbreite zu ermitteln, werden die Detektionssignale abhängig von der Arbeitsbreite zu wenigstens einem definiertem Zeitpunkt aufgezeichnet.

Um die Lage des Metallteiles unmittelbar beim ersten detektieren des Metallteils zu erfassen, wird der definierte Zeitpunkt vom Überschreiten des Schwellwerts bestimmt.

Um die Bewegung bzw. Erstreckung des Metallteils in Förderrichtung zu ermitteln, werden die Detektionssignale vorteilhafterweise über die Zeit aufgezeichnet,

Die Signalauswerteeinrichtung ist mit einer Anzeigeeinheit und/oder einem Bildschirm verbunden, damit der Fahrer über die Lage des Metallteils informiert wird und das Metallteil schneller auffindet.

In einer ersten Ausführung zeigen die Anzeigeeinheit und/oder der Bildschirm an, in welchen Detektionsbereichen zu einem bestimmten Zeitpunkt ein Detektionssignal erzeugt wurde, so dass der Suchbereich eingegrenzt wird.

In einer weiteren Ausführung zeigen die Anzeigeeinheit und/oder der Bildschirm an, in welchen Detektionsbereichen während des Zeitfensters Detektionssignale erzeugt wurden, so dass die Ausdehnung und Lage des Metallteils erkennbar ist.

In einer vorteilhaften Ausgestaltung weist die Anzeigeeinheit mehrere Leuchten aufweist, deren Anzahl und Anordnung der Anzahl und Anordnung der Detektionsbereiche entspricht, so dass der Fahrer an der Anzeige den Aufbau des Metalldetektors wiedererkennt und anhand der erleuchteten Lampen die Lage des Metallteils bezüglich des Metalldetektors ausmachen kann.

Wenn die Anzeigeeinheit im Sichtbereich des Arbeitsaggregates angeordnet ist, erfasst der vor dem Einzugsgehäuse stehende Fahrer ohne Standortwechsel sowohl die Anzeige als auch den aus dem Einzugsgehäuse herausgeförderten Erntegutstrom visuell.

Indem die Anzeigeeinheit und/oder der Bildschirm automatisch zurückgesetzt werden, wenn der Antrieb des Arbeitsaggregates wieder eingeschaltet wird, ist der Fahrer von dieser Aufgabe entlastet.

Wenn die Spulen nebeneinander, gleichmäßig beabstandet quer zur Förderrichtung des Arbeitsorgans angeordnet sind, weisen die Detektionsbereiche eine gleichgroße Detektionsempfindlichkeit auf.

Wenn der Metalldetektor an einer selbstfahrenden Erntemaschine angeordnet ist und die Information über das Auffinden und/oder die Art des Metallteils in Abhängigkeit von der Position der Erntemaschine beim Auffinden des Metallteils in einem Bordcomputer der Erntemaschine gespeichert wird, kann der Fahrer bei wiederholter Fahrt auf dem gleichen Feldstück gewarnt werden, an welcher Stelle des Feldstücks vermehrt Metallteile aufgefunden worden sind.

Weitere vorteilhafte Ausgestaltungen sind Gegenstand weiterer Unteransprüche und werden nachfolgend an Hand mehrerer Figuren dargestellten Ausführungsbeispiels näher erläutert.

Es zeigen:
- Fig-1: eine schematische Seitenansicht eines Feldhäckslers mit einer vergrößert dargestellten Anzeigeeinheit,
- Fig.2: einen Längsschnitt durch die untere Vorpresswalze mit einer damit verbundenen Anzeigeeinheit,
- Fig.3: eine räumliche Kurve, die die Detektionssignale zeitabhängig und abhängig von den betreffenden Detektionsbereichen darsteltt,

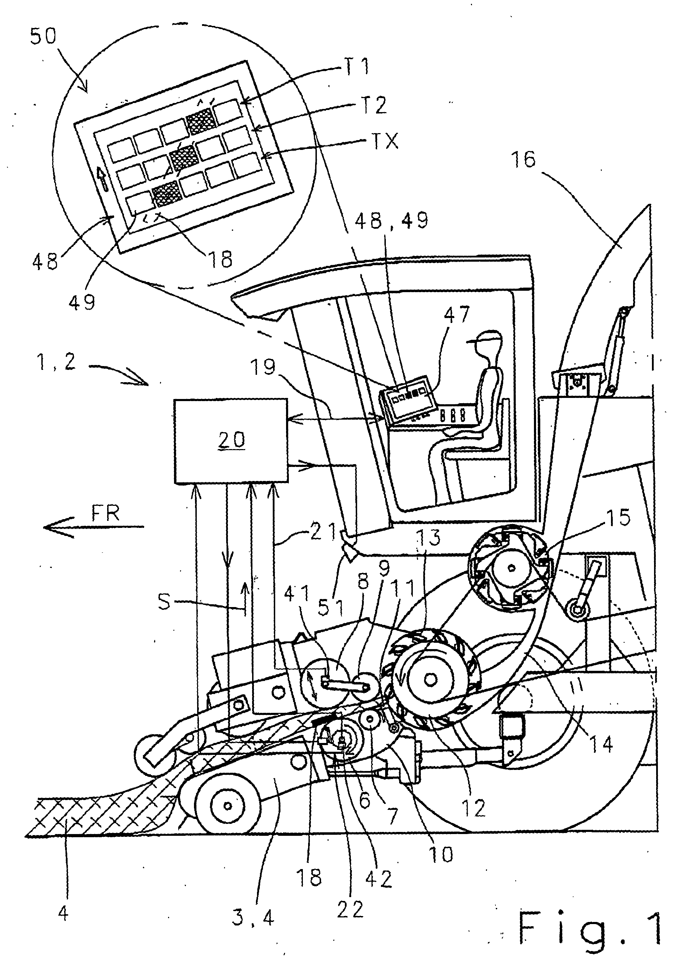

Fig.1 zeigt eine schematische Seitenansicht einer als selbstfahrender Feldhäcksler 1 ausgeführten landwirtschaftlichen Erntemaschine 2. An dem dargestellten Feldhäcksler 1 ist frontseitig ein als Pick-Up 3 ausgebildetes Vorsatzgerät 4 angeordnet, welches in Abhängigkeit von der jeweils zu emtenden Emtegutart austauschbar ist Die Pick-Up 3 dient dazu, dass Emtegut 5 vom Feld aufzunehmen und den als Vorpresswalzen 6, 7, 8, 9 ausgeführten Arbeitsorganen im Einzugsgehäuse 10 zuzuführen.

Das ankommende Emtegut 5 wird von einem ersten Vorpresswalzenpaar 6, 8 angenommen und verdichtet und zu einem zweiten Vorpresswalzenpaar 7, 9 gefördert, welches das vorverdichtete Emtegut 5 weiter zu einem Emtegutstrang verdichtet und den Emtegutstrang über eine Gegenschneide 11 zu einer Häckseitrommel 12 fördert. An der unmittelbar an der Häckseltrommel 12 angeordneten Gegenschneide 11 wird der Emtegutstrang mit den Häckselmessem 13 der Häckseltrommel 12 zerkleinert. Das Emtegut wird durch die Häckseltrommel 12 stromauf und in den Auswurfschacht 14 gefördert, Innerhalb des Auswurfschachtes 14 ist ein Beschleuniger 15 angeordnet, der das aus der Häckseltrommel 12 austretende Erntegut 5 weiter beschleunigt und durch einen Auswurfkrümmer 16 aus dem Feldhäcksler 1 heraus fördert und dabei beispielsweise auf ein Transportfahrzeug überlädt.
Innerhalb der unteren Vorpresswalze 6 des ersten Vorpresswalzenpaares 6, 8 ist eine Metalldetektionseinrichtung 17 angeordnet, mit der Metallteile 18 im Erntegutstrom sensiert werden können. Um zu verhindern, dass Metallteile 18 weiter in den Feldhäcksler 1 gelangen bzw. um Verunreinigungen im Emtegut 5 zu beseitigen, ist die Metalldetektionseinrichtung 17 mit einer Signalauswerteeinrichtung 20 verbunden. Die Signalauswerteeinrichtung 20 ist ihrerseits mit einer an sich bekannten Schnellstopvorrichtung 22 verbunden, welche die angetriebenen Vorpresswalzen 6, 7, 8, 9 abrupt anhält. Nach Erkennung eines Metallteils 18, wird der Schnellstop ausgelöst. Die Signalauswerteeinrichtung 20 ist mit dem zentralen Bordrechner in der Kabine des Feldhäckslers 1 verbunden bzw. ist Bestandteil des Bordrechners auf dessen Bildschirm 50 auf an späterer Stelle näher erläuterte Weise angezeigt wird, an welcher Stelle des Metalldetektors 17 ein Metallteil 18 erkannt wurde.
Damit das Metallteil 18 zusammen mit dem bereits aufgenommenen Emtegut 5 aus dem Feldhäcksler 1 hinaus gefördert wird, löst der Fahrer einen Reversiervorgang aus, bei dem die gemeinsam angetriebenen Vorpresswalzen 6, 7, 8, 9 und das Vorsatzgerät 4 in umgekehrter Richtung angetrieben werden.
Das Bedienelement für das Auslösen des Reversiervorgangs ist derart außerhalb der Kabine angebracht, dass der Fahrer den beim Reversieren aus dem Einzugsgehäuse 10 hinausströmenden Erntegutstrom untersuchen ; kann. Ebenso ist es denkbar, dass die Steuereinrichtung 20 mit einer Anzeigeeinheit 51 außerhalb der Kabine verbunden ist, die ebenfalls auf an späterer Stelle näher erläuterte Weise anzeigt, an welcher Stelle des Metalidetektors 17 das Metallteil 18 detektiert wurde. Die Anzeigeeinheit 51 ist so angeordnet, dass der vor dem Einzugsgehäuse 10 stehende Fahrer ohne Standortänderung sowohl das ausströmende Erntegut 5 als auch die Anzeigeeinheit 51 erkennt, damit er den Suchbereich eingrenzen kann und das Metallteil 18 im Emtegut 5 schneller auffindet.

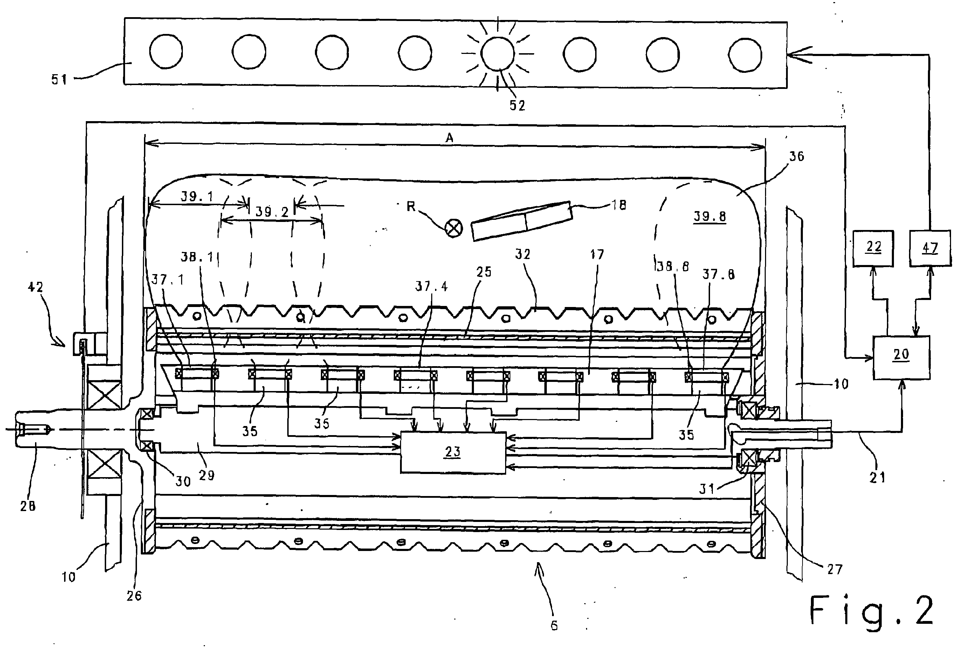

Fig.2 zeigt einen Längsschnitt durch die untere Vorpresswalze 6 des ersten Walzenpaares. Die Vorpresswalze 6 besteht aus einem Trommelmantel 25 mit an den Stimseiten des Trommelmantels 25 angeordneten Walzenflanschen. 26, 27. An dem in der Fig. 2 links angeordneten Walzenflansch 26 ist ein Wellenstumpf 28 drehfest befestigt, welcher drehbar im Einzugsgehäuse 10 gelagert ist- Beide Walzenflansche 26, 27 werden von einer Achse 29 durchdrungen, die einseitig drehfest mit dem Einzugsgehäuse 10 verbunden ist, wobei zwischen jedem Walzenflansch 26, 27 und der Achse 29 jeweils ein Wälzlager 30, 31 angeordnet ist und der Wellenstumpf 28 und die Achse 29 koaxial verlaufen, so dass die Vorpresswalze 6 um die Achse 29 drehen kann. Der Trommelmantel 25 besteht aus mehreren zwischen den Walzenflanschen 26, 27 angeordneten Walzenprofilen 32, die das Emtegut fördem. Auf der starren Achse 29 ist innerhalb der Vorpresswalze 6 die Metalldetektionseinrichtung 17 angeordnet. Die Metalldetektionseinrichtung 17 besteht aus mehreren in einer Reihe nebeneinander angeordneten Dauermagnete 35, die sich annähernd über die Breite der Vorpresstrommel 6 erstrecken. Die Dauermagnete 35 erzeugen ein nach oben gerichtetes durch den Trommelmantel 25 der Vorpresswalze 6 in den Erntegutstrom ragendes Magnetfeld 36. Auf den Dauermagneten 35 sind über die Breite der Vorpresstrommel 6 gleichmäßig beabstandet quer zur Förderichtung R der Vorpresswalze 6 acht Poischuhe 37.1 - 37.8 angeordnet, die jeweils in eine Spule 38.1 - 38.8 hineinragen. Die Spulen 38.1 -38.8 dienen als Sensoren, mit denen Veränderungen im Magnetfeld 36 registriert werden können, wobei jede Spule 38.1 -38.8 jeweils einen Detektionsbereich 39.1 -39.8 bildet. Jeweils nebeneinanderliegende Detektionsbereiche 39.1 - 39.8 überlappen einander, so dass alle Detektionsbereiche 39.1 -39.8 sich zusammen über die Arbeitsbreite; A der Vorpresswalze 6 erstrecken.
Ein Metallteil 18 im geförderten Emtegut führt zu einer Veränderung des Magnetfeldes 36 und bewirkt, dass in den Spulen 38.1 -38.8 in deren Detektionsbereich 39.1 39.8 die Veränderung des Magnetfeldes 36 auftritt Spannungen U induziert werden. Die Induktionsspannungen U werden an ein Signalmodul 23 übertragen. welches abhängig von den Spannungen U Detektionssignale S erzeugt, welche ihrerseits an die Signalauswerteeinrichtung 20 übermittelt werden.
Die Signalleitung 21 zur Übertragung der von dem Signalmodul 23 generierten Detektionssignale S werden durch eine Bohrung 40 in der Achse 29 zu der Signalauswerteeinrichtung 20 nach Außen geführt.

Die Detektionssignale S werden wie in Fig- 3 dargestellt, in einem Zeitfenster Z erfasst und in einem Speicher der Signalauswerteeinrichtung 20 über die Zeit t aufgezeichnet. Das Zeitfenster Z umfasst eine Zeitspanne, die beginnt, sobald ein Detektionssignal S einen in der Signalauswerteeinrichtung 20 hinterlegten Auslöseschwellwert überschreitet, der bewirkt, dass die Signalauswerteeinrichtung 20 ein Stoppsignal generiert, das an die Schnellstopvorrichtung 22 übermittelt wird. Die Schnellstoppvorrichtung 22 sorgt dann für ein sofortiges Anhalten der Vorpresswalzen 6, 7, 8, 9 sowie des Vorsatzgerätes 4. Die Zeitfenster Z endet bei Stillstand der Vorpresswalzen 6, 7 der auf an sich bekannte Weise über den Vorpresswalzen 6, 7 zugeordneten Drehzahlsensoren 41, 42 ermittelt wird, deren Drehzahlsignale an die Signalauswerteeinrichtung 20 übermittelt werden.

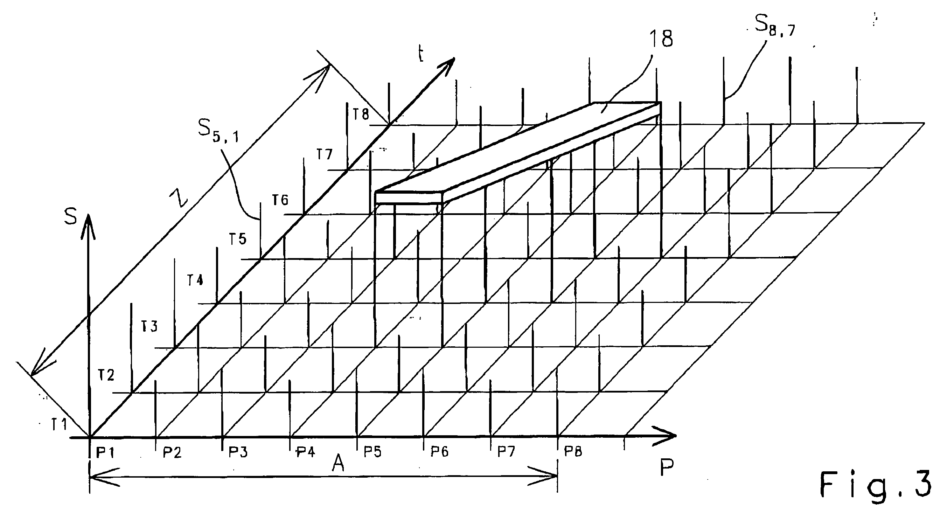

Zusätzlich werden die Detektionssignale S, wie in Fig.3 dargestellt, abhängig von der Arbeitsbreite A zu einem definiertem Zeitpunkt T1, der vom Überschreiten des Auslöseschwellwerts bestimmt wird und zu weiteren definierten Zeitpunkten TX während des Zeitfensters Z aufgezeichnet

Die in Fig.2 dargestellte Anzeigeeinheit 51 besteht aus einer Reihe mehrerer nebeneinander gleichmäßig beabstandeter Leuchten 52, wobei die Anordnung und Anzahl der Leuchten 52 der Anzahl und Anordnung der Detektionsbereiche 39.1 -39.8 der Metalldetektionseinrichtung 19 entspricht. Die Anzeigeeinheit 47 zeigt an, in welchem Detektionsbereich 39.1 - 39.8 zu einem definiertem Zeitpunkt T1 - TX Spannungen U erzeugt wurden, indem die entsprechenden Leuchten 52 aufleuchten.
Ebenso ist es möglich, dass die Anzeigeeinheit 47 anzeigt, in welchem Detektionsbereich 39.1 - 39.8 innerhalb des Zeitfensters Z Spannungen U erzeugt wurden.
Der Fahrer erkennt an der Anzeigeeinheit 51 an welcher Stelle bezogen auf die Ar beitsbreite A der Vorpresstrommel 6 sich das Metallteil 18 befindet.

In dem vergrößerten Ausschnitt der Fig.1 sind auf dem Bildschirm 50 des Bordrechners mehrere untereinander angeordneten Reihen 48 von Symbolen 49 abgebildet. Die Anordnung und Anzahl der Symbole 49 einer Reihe 48 entspricht wie bei der ersten Ausführung jeweils der Anzahl und Anordnung der Detektionsbereiche 39.1 - 39.8 der Metalldetektionseinrichtung 19. Die Anzeigeeinheit 50 zeigt an, in welchem Detektionsbereich 39.1 - 39.8 zu bestimmten Zeitpunkten T1 -TX im Zeitfenster Z Detektionssignale S erzeugt wurden, wobei jede Reihe 48 einen Zeitpunkt T1 -TX abbildet; dazu ändern die entsprechenden Symbole 49 ihre Farbe. Der Fahrer erkennt an der:Anzeigeeinheit 50 an welcher Stelle bezogen auf die Arbeitsbreite A der Vorpresstrommel 6 sich das Metallteil 18 befindet. Zusätzlich erkennt er die Erstreckung des Metallteils 18 in Förderrichtung der Vorpresstrommel 6.

In Fig. 3 ist ein dreiachsiges Koordinatensystem dargestellt in dem die Detektionssignale S abhängig von der Zeit t sowie abhängig von der Arbeitsbreite A in einer räumlichen Kurve 46 dargestellt sind.
Anhand der Detektionssignale S kann direkt Rückschluss auf die Lage und Erstreckung des Metallteils 18 gezogen werden.

Es ist denkbar, dass die Signalauswertevorrichtung 20 mit den Detektionssignalen S die Art des Metallteiles ermittelt und dem Fahrer über eine Anzeigeeinheit 47, 51 eine Information gibt, ob es sich beispielsweise um einen Draht, einen Pfosten oder einen Zinken handelt.

Ebenso ist es möglich, das der Fahrer die Information, dass er ein Metallteil und welches Metallteil er gefunden hat, in den Bordcomputef eingibt und diese Information zusammen mit der beispielsweise von einem Navigationssystem ermittelten Position des Feldhäckslers 1 beim Auslösen des Schnellstopps protokolliert werden. Bei wiederholtem Befahren des gleichen Feldstücks könnte dann ein Wamhinweis an den Fahrer übermittelt werden, das in einem bestimmten Bereich des Feldes bei vorangegangenen Emtefahrten z. B. vermehrt bestimmte Metallgegenstände sensiert worden sind.

Sobald der Fahrer den Antrieb der Vorpresswalzen 6, 7, 8, 9 bzw. des Vorsatzgerätes 4 wieder eingeschaltet hat, wird die Bildschirmanzeige 50 bzw. die Anzeigeeinheit 51 automatisch zurückgesetzt. Es ist jedoch auch möglich, das der Fahrer die Rücksetzung manuell veranlasst, nachdem er das sensierte Emtegut 5 durchsucht hat und anschließend quittiert, ob er ein Metallteil gefunden hat.

Weiterhin ist eine Ausführung denkbar bei der der Speicher der Signalauswerteeinrichtung 20 als Ringspeicher ausgeführt ist und die Detektionssignale S kontinuierlich in einen Ringspeicher gespeichert werden. Das bedeutet, das die ältesten Detektionssignale S gelöscht werden, wenn neue Detektionsignale S abgespeichert werden. Im Gegensatz zum ersten Ausführungsbeispiel bezieht sich bei dieser zweiten Ausführung der Erfindung die Auswertung auf die im Zeitfenster Z erfassten Detektionssignale S.

Es liegt im Rahmen des Könnens eines Fachmannes die beschriebenen Ausführungsbeispiele in nicht dargestellter Weise abzuwandeln oder in anderen Maschinensystemen einzusetzen, um die beschriebenen Effekte zu erzielen, ohne dabei den Rahmen der Erfindung zu verlassen.

### Bezugszeichenliste:

- 1: Feldhäcksler
- 2: Selbstfahrende Erntemaschine
- 3: Pick-Up
- 4 -: Vorsatzgerät
- 5: Erntegut
- 6: Vorpresswalze
- 7: Vorpresswalze
- 8: Vorpresswalze
- 9: Vorpresswalze
- 10: Einzugsgehäuse
- 11: Gegenschneide
- 12: Häckseltrommel
- 13: Häckselmesser
- 14: Auswurfschacht
- 15: Beschleuniger
- 16: Auswurfkrümmer
- 17: Metalldetektionseinrichtung
- 18: Metallteil
- 20: Signalauswerteeinrichtung
- 21: Signalleitung
- 22: Schnellstopvorrichtung
- 23: Signalmodul
- 25: Trommelmantel
- 26: Walzenflansch
- 27: Walzenflansch
- 28: Wellenstumpf
- 29: Achse
- 30: Wälzlager
- 31: Wälzlager
- 32: Walzenprofile
- 35: Dauermagnet
- 36: Magnetfeld
- 37.1-37.8: Polschuh
- 38.1-38.8: Spule
- 39.1-39.8: Detektionsbereich
- 40: Bohrung
- 41: Drehzahlsensor
- 42: Drehzahlsensor
- 47: Anzeigeeinheit
- 48: Reihe
- 49: Symbole
- 50: Bildschirm
- 51: Anzeigeeinheit
- 52: Leuchte

- Z: Zeitfenster
- T1-TX: Zeitpunkt
- S: Detektionssignal
- U: Spannung
- t: Zeit
- R: Fahrtrichtung

## Patentansprüche

1. Metalldetektionseinrichtung (17) für ein wenigstens ein angetriebenes Arbeitsorgan (6, 7) aufweisendes Arbeitsaggregat (6, 7) zum Fördern von Erntegut, bestehend aus Spulen (38.1 -38.8) zur Erzeugung von elektrischen Signalen (S) bei Anwesenheit von Metallteilen (18) im Bereich des Arbeitsaggregates (6, 7),
**dadurch gekennzeichnet,**
**dass** die von den Spulen (38.1 -38.8) erzeugten Detektionssignale (S) in einem Zeitfenster (Z) erfasst werden.

2. Metalldetektionseinrichtung nach Anspruch 1,
**dadurch gekennzeichnet,**
**dass** das Zeitfenster (Z) startet, wenn das Detektionssignal (S) wenigstens einer Spule (38.1 -38.8) einen Schwellwert überschreitet.

3. Metalldetektionseinrichtung nach wenigstens einem der vorhergehenden Ansprüche,
**dadurch gekennzeichnet,**
**dass** das Zeitfenster (Z) endet, sobald die Arbeitsorgane (6, 7) den Stillstand erreicht haben.

4. Metalldetektionseinrichtung nach wenigstens einem der vorhergehenden Ansprüche,
**dadurch gekennzeichnet,**
**dass** die von den Spulen (38.1 -38.8) erzeugten Detektionssignale (S) in einem Zeitfenster (Z) erfasst werden, welches startet, wenn das Detektionssignal (S) wenigstens einer Spule (38.1 -38.8) einen Schwellwert überschreitet und welches endet, sobald die Arbeitsorgane (6, 7) den Stillstand erreicht haben.

5. Metalldetektionseinrichtung nach wenigstens einem der vorhergehenden Ansprüche,
**dadurch gekennzeichnet,**
**dass** der Stillstand der Arbeitsorgane (8, 7, 8, 9) mittels Drehzahlsensoren (42) überwacht wird.

6. Metalldetektionseinrichtung nach wenigstens einem der vorhergehenden Ansprüche,
**dadurch gekennzeichnet,**
**dass** jede Spule (38.1 -38.8) von einem Dauermagneten (35) durchsetzt ist und jeweils einen Detektionsbereich (39.1 -39.8) bildet und die Detektionssignale (S) Induktionsspannungen (U) sind, die durch die Anwesenheit des Metallteils (18) in dem von der zugehörigen Spulen (38.1 -38.8) erzeugten Detektionsbereich (39.1 -39.8).von der Spule (38.1 -38.8) generiert werden.

7. Metalldeiekfiivnseinrichtung nach wenigstens einem der vorhergehenden Ansprüche,
**dadurch gekennzeichnet,**
**dass** sich benachbarte Detektionsbereiche (39.1 -39.8) überlappen und eine Arbeitsbreite (A) der Metalldetektionseinrichtung (17) begrenzen.

8. Metalldetektionseinrichtung nach wenigstens einem der vorhergehenden Ansprüche,
**dadurch gekennzeichnet,**
**dass** die erzeugten Detektionssignale (S) an eine Signalauswerteeinrichtung (20) übermittelt werden.

9. Metalldetektionseinrichtung nach wenigstens einem der vorhergehenden Ansprüche,
**dadurch gekennzeichnet,**
**dass** die Signalauswerteeinrichtung (20) die Detektionssignale (S) mit einem Schwellwert vergleicht und bei Überschreiten des Schwellwertes den Schnellstop des oder der Arbeitsorgane (6, 7, 8, 9) auslöst.

10. Metalldetektionseinrichtung nach wenigstens einem der vorhergehenden Ansprüche,
**dadurch gekennzeichnet,**
**dass** die Detektionssignale (S) abhängig von der Arbeitsbreite (A) zu wenigstens einenrr definierten Zeitpunkt (T1-TX) aufgezeichnet werden.

11. Metalldetektionseinrichtung nach wenigstens einem der vorhergehenden Ansprüche,
**dadurch gekennzeichnet,**
**dass** der definierte Zeitpunkt (T1) vom Überschreiten des Schwellwerts bestimmt wird.

12. Metalldetektionseinrichtung nach wenigstens einem der vorhergehenden Ansprüche,
**dadurch gekennzeichnet,**
**dass** die Detektionssignale (S) jedes Detektionsbereichs (39.1 - 39.8) über die Zeit (t) aufgezeichnet werden.

13. Metalldetektionseinrichtung nach wenigstens einem der vorhergehenden Ansprüche,
**dadurch gekennzeichnet,**
**dass** die Signalauswerteeinrichtung (20) mit einer Anzeigeeinheit (50) und/oder einem Bildschirm (50) verbunden ist.

14. Metalldetektionseinrichtung nach wenigstens einem der vorhergehenden Ansprüche,
**dadurch gekennzeichnet,**
**dass** die Anzeigeeinheit (50) mehrere Leuchten (52) aufweist, deren Anzahl und Anordnung der Anzahl und Anordnung der Detektionsbereiche (39.1-39.8) entspricht.

15. Metalldetektionseinrichtung nach wenigstens einem der vorhergehenden Ansprüche,
**dadurch gekennzeichnet,**
**dass** die Anzeigeeinheit (50) im Sichtbereich des Arbeitaggregates (6, 7) angeordnet ist.

16. Metalldetektionseinrichtung nach wenigstens einem der vorhergehenden Ansprüche,
**dadurch gekennzeichnet,**
**dass** die Anzeigeeinheit (51) und/oder der Bildschirm (50) anzeigen, in welchen Detektionsbereichen (39.1 - 39.8) zu wenigstens einem definierten Zeitpunkt (T1 -TX) des Zeitfensters (Z) ein Detektionssignal (S) erzeugt wurde.

17. Metalldetektionseinrichtung nach wenigstens einem der vorhergehenden Ansprüche,
**dadurch gekennzeichnet,**
**dass** die Anzeigeeinheit (51) und/oder der Bildschirm (50) anzeigt, in welchen Detektionsbereichen (39.1 - 39.8) während des Zeitfensters (Z) Detektionssignale (S) erzeugt wurden.

18. Metalldetektionseinrichtung nach wenigstens einem der vorhergehenden Ansprüche,
**dadurch gekennzeichnet,**
**dass** die Anzeigeeinheit (51) und/oder der Bildschirm (50) automatisch zurückgesetzt werden, wenn der Antrieb des Arbeitsaggregates (6, 7) wieder eingeschaltet wird.

19. Metalldetektionseinrichtung nach wenigstens einem der vorhergehenden Ansprüche,
**dadurch gekennzeichnet,**
**dass** die Spulen (38.1 -38.8) nebeneinander, gleichmäßig beabstandet quer zur Förderrichtung des Arbeitsorgans (6) angeordnet sind.

20. Metalldetektionseinrichtung nach wenigstens einem der vorhergehenden Ansprüche,
**dadurch gekennzeichnet,**
**dass** der Metalldetektor (17) an einer selbstfahrenden Erntemaschine (2) angeordnet ist und die Information über das Auffinden und/oder die Art des Metallteils (18) in Abhängigkeit von der Position der Erntemaschine (2) beim Auffinden des Metallteils (18) in einem Bordcomputer der Erntemaschine (2) gespeichert wird.
